# EUROPÄISCHE PATENTSCHRIFT

(11) **EP 3 225 706 B1**
(45) Veröffentlichungstag und Bekanntmachung des Hinweises auf die Patenterteilung: **01.08.2018**
(21) Anmeldenummer: 16162639.5
(22) Anmeldetag: 29.03.2016
(51) Int. Cl.: C22B 11/02

(54) **VERFAHREN ZUR RÜCKGEWINNUNG VON RHENIUM UND MINDESTENS EINEM PLATINGRUPPENELEMENT AUS KATALYSATORPARTIKELN**
METHOD FOR THE RECOVERY OF RHENIUM AND AT LEAST ONE PLATINUM GROUP ELEMENT FROM CATALYST PARTICLES
PROCEDE DE RECUPERATION DE RHENIUM ET D'AU MOINS UN ELEMENT DE GROUPE DU PLATINE A PARTIR DE PARTICULES DE CATALYSEUR

(43) Veröffentlichungstag der Anmeldung: 04.10.2017
(73) Patentinhaber: Heraeus Deutschland GmbH & Co. KG, 63450 Hanau (DE)
(72) Erfinder: STEMMLER, Marco, 63776 Mömbris (DE); AGTHE, Andreas, 63762 Großostheim (DE); FUCHS ALAMEDA, Stefanie, 63599 Biebergemünd (DE); GÜNTHER, Magdalena, 63599 Biebergemünd (DE)
(74) Vertreter: Heraeus IP

(56) Entgegenhaltungen:
- CN-A- 104 923 218
- DE-T2- 69 319 496
- L. G. KASIKOV ET AL: "Processing of deactivated platinum-rhenium catalysts", THEORETICAL FOUNDATIONS OF CHEMICAL ENGINEERING, Bd. 43, Nr. 4, 1. August 2009 (2009-08-01) , Seiten 544-552, XP055296227, RU ISSN: 0040-5795, DOI: 10.1134/S0040579509040320
- MEYER ET AL: "Precious Metals Recovery from Spent Reforming Catalysts", 1. Januar 2004 (2004-01-01), CATALYTIC NAPHTHA REFORMING, REVISED AND EXPANDED,, PAGE(S) 459 - 475, XP009191412, * das ganze Dokument *
- MANIS KUMAR JHA ET AL: "Hydrometallurgical recovery/recycling of platinum by the leaching of spent catalysts: A review", HYDROMETALLURGY., Bd. 133, 1. Februar 2013 (2013-02-01), Seiten 23-32, XP055296220, NL ISSN: 0304-386X, DOI: 10.1016/j.hydromet.2012.11.012

## Beschreibung

Die Erfindung betrifft ein Verfahren zur Rückgewinnung von Rhenium und mindestens einem Platingruppenelement aus Katalysatorpartikeln auf Basis von Aluminiumoxid, welche Rhenium und mindestens ein Platingruppenelement umfassen.

Heterogene Katalysatoren auf Basis von Aluminiumoxid als Katalysatorträgermaterial, die sowohl Rhenium als auch mindestens ein Platingruppenelement umfassen, sind in vielen großchemischen Prozessen, insbesondere petrochemischen Prozessen im Einsatz. Als Beispiel zu nennen ist der Reforming-Prozess, bei dem insbesondere Rhenium und Platin umfassende Katalysatoren zum Einsatz kommen. Von Zeit zu Zeit sind solche Katalysatoren verbraucht, d.h. ihre Katalysatorwirkung lässt nach und sie müssen gegen frische Katalysatoren ausgetauscht werden. Die verbrauchten Katalysatoren werden zwecks Rückgewinnung der in ihnen enthaltenen wertvollen Edelmetalle zum Recycling gegeben.

Im Falle der in Rede stehenden Katalysatoren besteht ein gebräuchlicher Recyclingprozess in einem alkalischen Druckaufschluss, bei dem das Aluminiumoxidträgermaterial in hochkonzentrierter Alkalihydroxid-Lösung im Autoklaven bei Temperaturen im Bereich von beispielsweise 180 bis 220 °C und einem Druck im Bereich von beispielsweise 8-25 bar zu Alkalialuminat aufgelöst wird, wobei das Rhenium im Wesentlichen als Perrhenat und das Platingruppenelement im Wesentlichen als Metall gewonnen wird; vgl. die Artikel von Mahmoud I. El Guindy, "Processing of Spent Platinum Rhenium Catalyst For Rhenium Recovery", Seiten 89-97, in Rhenium and Rhenium Alloys, Edited by B.D.Bryskin, The Minerals, Metals & Materials Society, 1997 und von H. Meyer und M. Grehl, "Precious Metals Recovery from Spent Reforming Catalysts", Kapitel 12, Seiten 1-11 in Catalytic Naphtha Reforming, Chemical Industries, 2004, sowie Kasikov, L. G., und Petrova, A. M., "Processing of deactivated platinum-rhenium catalysts", Theoretical Foundations of Chemical Engineering, 43(4), Seiten 544-552, 2009.

Oftmals kann das Rhenium bei besagtem alkalischen Druckaufschluss nur unvollständig, beispielsweise bis zu ca. 90%, unmittelbar in Form von Perrhenat im Filtrat zurückgewonnen werden. Das restliche Rhenium stellt zu einem kleinen Teil Verlust dar, findet sich jedoch überwiegend zusammen mit zurückgewonnenem und als Metall angefallenem Platingruppenelement oder -elementen im festen Rückstand wieder und muss daraus abgetrennt werden.

Es bestand die Aufgabe, ein verbessertes alkalisches Druckaufschluss-Verfahren für Katalysatoren der in Rede stehenden Art zu finden.

Die Aufgabe wird gelöst durch ein Verfahren zur Rückgewinnung von Rhenium und mindestens einem Platingruppenelement aus Aluminiumoxid-basiertes Katalysatorträgermaterial, Rhenium sowie mindestens ein Element der Platingruppe umfassenden Katalysatorpartikeln, umfassend die aufeinanderfolgenden Schritte:
(a) Herstellen einer Mischung aus besagten Katalysatorpartikeln und einer wässrigen 30-50 gew.-%igen Alkalihydroxid-Lösung,
(b) Einleiten von Sauerstoff, Luft oder einem Gasgemisch umfassend Inertgas und mindestens 20 Vol.-% Sauerstoff in die in Schritt (a) hergestellte Mischung,
(c) Erhitzen der in Schritt (b) erhaltenen Mischung unter Druck auf eine Temperatur im Bereich von 150 bis 220 °C für einen Zeitraum von 1 bis 16 Stunden,
(d) Abkühlen der in Schritt (c) erhaltenen flüssigen Zusammensetzung,
(e) Abtrennen festen Rückstands aus der in Schritt (d) erhaltenen abgekühlten flüssigen Zusammensetzung unter Gewinnung einer flüssigen Phase,
wobei während der Teilschrittfolge (a) bis (c) ein zur Reduktion von Perrhenat nicht befähigtes Reduktionsmittel zu der betreffenden Mischung zugegeben wird.

Das erfindungsgemäße Verfahren umfasst die aufeinander folgenden Schritte (a) bis (e), wobei, wie nachstehend noch näher erläutert, während der Teilschrittfolge (a) bis (c) ein zur Reduktion von Perrhenat nicht befähigtes Reduktionsmittel zu der betreffenden Mischung zugegeben wird.

Es ist dabei nicht ausgeschlossen, dass während des erfindungsgemäßen Verfahrens weitere Schritte stattfinden, in jedem Falle wird jedoch die Schrittfolge (a) bis (e) eingehalten. Insofern versteht der Fachmann "aufeinander folgende Schritte (a) bis (e)" als Definition einer Schrittabfolge (a) bis (e), wobei die Schritte (a) bis (e) nicht zwingend direkt und unmittelbar aufeinander folgen müssen.

In Schritt (a) des erfindungsgemäßen Verfahrens wird eine Mischung aus Aluminiumoxid-basiertes Katalysatorträgermaterial, Rhenium sowie mindestens ein Element der Platingruppe umfassenden Katalysatorpartikeln und einer wässrigen Lösung von 30 - 50 Gew.-% Alkalihydroxid, insbesondere Natrium- und/oder Kaliumhydroxid, hergestellt.

Bei den Aluminiumoxid-basiertes Katalysatorträgermaterial, Rhenium sowie mindestens ein Element der Platingruppe umfassenden Katalysatorpartikeln kann es sich um zerkleinerten Katalysator und/oder insbesondere um typische Schüttgutkatalysator-Formkörper (wie z.B. Granulat, Presslinge oder Extrudate wie Pellets, Zylinder, Ringe, Kugeln, Quader, Plättchen, Stäbchen) handeln. Insbesondere handelt es sich um Katalysatorpartikel aus verbrauchtem Katalysatormaterial, beispielsweise verbrauchten Reforming-Katalysator. Im Falle von verbrauchtem Katalysatormaterial kann dieses vorbehandelt worden sein, beispielsweise im Hinblick auf die Behandlung gemäß der erfindungsgemäßen Verfahrensweise. In dem Zusammenhang sei insbesondere auf die Ausführungen auf Seite 7 des eingangs schon genannten Artikels von H. Meyer und M. Grehl verwiesen. Die Durchmesser oder die Grössen der Katalysatorpartikel können beispielsweise im Bereich von etwa 1 bis 20 Millimeter, insbesondere 2 bis 10 Millimeter liegen.

Die Katalysatorpartikel umfassen Aluminiumoxid-basiertes Katalysatorträgermaterial, Rhenium sowie mindestens ein Element der Platingruppe. Die Katalysatorpartikel sind typischerweise porös. Üblicherweise befindet sich das Rhenium und das mindestens eine Platingruppenelement auf der Porenoberfläche solcher poröser Katalysatorpartikel.

Das Katalysatorträgermaterial basiert auf Aluminiumoxid, d.h. Aluminiumoxid ist mit beispielsweise 70 bis 100 Gew.-% der Hauptbestandteil des Katalysatorträgermaterials. Im Falle eines Aluminiumoxid-Anteils des Katalysatorträgermaterials unter 100 Gew.-%, kann das Aluminiumoxid beispielsweise Hauptbestandteil eines Mischoxids aus Aluminiumoxid und einem oder mehreren anderen Metalloxiden sein und/oder es kann Dotierungen aufweisen. Geeignete Dotierungsmittel können ausgewählt sein aus der Gruppe bestehend aus Seltenerdmetallen, Übergangsmetallen und Erdalkalimetallen. Die hier als Metalloxide angesprochenen Metalle und die als Dotierungsmetalle angesprochenen Übergangsmetalle sind verschieden von dem von den Katalysatorpartikeln umfassten Rhenium und dem mindestens einen Platingruppenelement.

Das Rhenium sowie das mindestens eine Element der Platingruppe, wie beispielsweise Platin, Palladium, Ruthenium, Iridium, insbesondere jedoch Platin und/oder Palladium, liegen typischerweise in einem Gesamtmengenanteil beispielsweise im Bereich von 0,1 bis 1,4 Gew.-% in den Katalysatorpartikeln, also bezogen auf das Gewicht der Katalysatorpartikel vor. Der Rheniumgehalt der Katalysatorpartikel kann beispielsweise im Bereich von 0,01 bis 0,7 Gew.-% liegen, während der Gehalt an dem mindestens einen Element der Platingruppe beispielsweise im Bereich von 0,1 bis 0,7 Gew.-% liegen kann.

Sowohl das Rhenium als auch das mindestens eine Element der Platingruppe können elementar und/oder als chemische Verbindung, beispielsweise als Oxid, von den Katalysatorpartikeln umfasst sein, beispielsweise in bzw. auf den Katalysatorpartikeln vorliegen.

Die Katalysatorpartikel können neben dem Aluminiumoxid-basierten Katalysatorträgermaterial, dem Rhenium sowie dem mindestens einen Element der Platingruppe weitere Substanzen (wie z.B. Halogenide, Kohlenstoff, Kohlenwasserstoffe) umfassen, üblicherweise dann allerdings in einem geringen Gesamtmengenanteil von beispielsweise 2 bis unter 20 Gew.-%.

Dies ist insbesondere dann der Fall, wenn es sich bei den Katalysatorpartikeln um Partikel aus einem verbrauchten Katalysator oder einem verbrauchten und vorbehandelten Katalysator handelt.

Die Mischung aus den Aluminiumoxid-basiertes Katalysatorträgermaterial, Rhenium sowie mindestens ein Element der Platingruppe umfassenden Katalysatorpartikeln und der wässrigen 30 - 50 gew.-%igen Alkalihydroxid-Lösung wird üblicherweise in einem Gewichtsverhältnis von 1 Gewichtsteil Katalysatorpartikel : 1 - 2,5 Gewichtsteilen wässriger Alkalihydroxid-Lösung hergestellt. Dabei können die Katalysatorpartikel zur wässrigen Alkalihydroxid-Lösung gegeben werden oder umgekehrt. Vorzugsweise sind die Katalysatorpartikel in der Mischung vollständig von Flüssigkeit bzw. der wässrigen Alkalihydroxid-Lösung bedeckt.

In Schritt (b) des erfindungsgemäßen Verfahrens wird ein aus der aus Sauerstoff, Luft und Gasgemischen, welche Inertgas und mindestens 20 Vol.-% Sauerstoff umfassen, bestehenden Gruppe ausgewähltes Gas in die in Schritt (a) hergestellte Mischung eingeleitet. Im Falle des Inertgas und mindestens 20 Vol.-% Sauerstoff umfassenden Gasgemischs eignen sich als Inertgas alle mit den Bestandteilen der Mischung nicht reagierenden Gase wie insbesondere Stickstoff und/oder Edelgase. Neben Inertgas und Sauerstoff enthält besagtes Gasgemisch keine weiteren bewusst zugemischten Gase.

Die Temperatur der Mischung liegt während Schritt (b) beispielsweise im Bereich von 15 bis 80 °C.

Es kann zweckmäßig sein, die Mischung zu durchmischen, beispielsweise durch Rühren und/oder unter Ausnutzung eines Durchmischungseffekts, der sich infolge der Gaseinleitung ergibt.

Das Gas wird bevorzugt in der unteren Hälfte der Mischung eingeleitet. Besonders bevorzugt ist es, wenn das Gas am Boden eines die Mischung enthaltenden Behälters eingeleitet wird. Das Gas kann bevorzugt so eingeleitet werden, dass die in der Flüssigkeit bzw. der wässrigen Alkalihydroxid-Lösung aufsteigenden Gasblasen die Mischung durchperlen und für eine Durchmischung sorgen können. Dabei kann der Gasfluss bevorzugt so eingestellt werden, dass die Gasblasen die Katalysatorpartikel umströmen und vorwiegend die Flüssigkeit durchmischen können. Der Gasfluss kann dabei besonders bevorzugt so eingestellt werden, dass die Mischung beim Durchmischen nicht spritzt. Beispielsweise hat sich in Laborversuchen ein Gasfluss von 50-500 l/h bei Verwendung eines zylindrischen Gefäßes mit einem Durchmesser im Bereich von 5 bis 10 cm und bei einer Mischungssäule im Bereich von 10 bis 30 cm als zweckmäßig erwiesen.

Die Dauer von Schritt (b) kann beispielsweise im Bereich von 0,5 bis 10 Stunden, bevorzugt 2 bis 6 Stunden liegen.

Es kann zweckmäßig sein, der Katalysatorpartikel und wässrige Alkalihydroxid-Lösung umfassenden Mischung Entschäumer zuzusetzen, beispielsweise zwecks Verminderung oder Verhinderung einer im Verlaufe von Schritt (b) eventuell möglichen Schaumbildung. Neben käuflichen Entschäumern haben sich beispielsweise langkettige Alkohole als geeignete Entschäumer erwiesen.

In einer bevorzugten Ausführungsform des erfindungsgemäßen Verfahrens kann zwischen den Schritten (b) und (c) eine Spülung mit Inertgas (Stickstoff und/oder Edelgas wie Argon) erfolgen, beispielsweise zwecks Verdrängung von Sauerstoff aus der nach Abschluß von Schritt (b) erhaltenen Mischung bzw. aus dem die Mischung beinhaltenden Behälter.

In Schritt (c) des erfindungsgemäßen Verfahrens wird die in Schritt (b) erhaltene Mischung, ggf. nach einer Inertgasspülung wie im vorausgehenden Absatz erwähnt, auf eine Temperatur im Bereich von 150 bis 220 °C für einen Zeitraum von 1 bis 16 Stunden, bevorzugt 3 bis 10 Stunden erhitzt.

Dies geschieht zweckmäßigerweise in einem Autoklaven oder Druckreaktor. Der Druck kann dabei beispielsweise bis zu 25 bar betragen.

Es ist zweckmäßig die Schritte (a) bis (c) ohne Wechsel des Behälters von Anbeginn in besagtem Autoklaven bzw. Druckreaktor durchzuführen.

Während Schritt (c) wird das Aluminiumoxid-basierende Katalysatorträgermaterial der Katalysatorpartikel im Sinne eines alkalischen Druckaufschlusses unter Bildung von Alkalialuminat aufgelöst. Man erhält eine flüssige Zusammensetzung mit einer geringen Menge festen Rückstands, im allgemeinen < 20 Gew.-% festen Rückstands, bezogen auf das Gewicht der in Schritt (a) eingesetzten Katalysatorpartikel. Der feste Rückstand umfasst mittels des alkalischen Druckaufschlusses nicht aufschließbare Bestandteile der Katalysatorpartikel sowie das mindestens eine Platingruppenelement in metallischer Form ohne oder bei nur geringem Verlust, d.h. in einem hohen Anteil von beispielsweise 99 bis 100 % bezogen auf die von den in Schritt (a) eingesetzten Katalysatorpartikeln ursprünglich umfasste Menge des mindestens einen Platingruppenelements.

Während der Teilschrittfolge (a) bis (c) wird ein zur Reduktion von Perrhenat nicht befähigtes Reduktionsmittel zu der betreffenden Mischung zugegeben, entweder auf einmal oder in mehreren Portionen, beispielsweise auch zu verschiedenen Zeitpunkten während der Teilschrittfolge (a) bis (c). Das zur Reduktion von Perrhenat nicht befähigte Reduktionsmittel kann im Zuge von Schritt (a) und/oder (b) zugegeben werden, bevorzugt ist jedoch eine Zugabe zwischen den Schritten (b) und (c) und/oder während Schritt (c). Das zur Reduktion von Perrhenat nicht befähigte Reduktionsmittel dient einer gegebenenfalls möglichen Reduktion des mindestens einen Platingruppenelementes. Es ist daher zweckdienlich, wenn das zur Reduktion von Perrhenat nicht befähigte Reduktionsmittel das mindestens eine Platingruppenelement aus einem oxidierten Zustand (Oxidationszahl > 0) zum metallischen Platingruppenelement zu reduzieren vermag, wie beispielsweise Formiat. Dementsprechend kann das zur Reduktion von Perrhenat nicht befähigte Reduktionsmittel Formiat umfassen oder Formiat sein.

Die Zugabe von Formiat kann beispielsweise in Form von Ameisensäure oder bevorzugt in Form von Alkaliformiat geschehen. Dabei kann das Formiat beispielsweise in einem molaren Verhältnis von 5 bis 20 Mol Formiat pro Mol des von den Katalysatorpartikeln umfassten mindestens einen Platingruppenelements zugegeben werden.

In Schritt (d) des erfindungsgemäßen Verfahrens wird die in Schritt (c) erhaltene flüssige Zusammensetzung abgekühlt, insbesondere auf eine Temperatur im Bereich von 70 bis 90°C. Dies kann der Einfachheit halber durch passives Abkühlen geschehen.

In Schritt (e) des erfindungsgemäßen Verfahrens wird fester Rückstand aus der in Schritt (d) erhaltenen abgekühlten flüssigen Zusammensetzung unter Gewinnung einer flüssigen Phase abgetrennt. Dabei können übliche Methoden der Fest-Flüssig-Trennung wie beispielsweise Dekantieren, Filtrieren und Zentrifugieren angewendet werden, gegebenenfalls auch in Kombination.

Die abgetrennte flüssige Phase enthält gelöstes Alkalialuminat und Rhenium als gelöstes Alkaliperrhenat. Analysen haben gezeigt, dass mit dem erfindungsgemäßen Verfahren 95 oder mehr % des von den Katalysatorpartikeln umfassten Rheniums als Perrhenat zurückgewonnen werden können. Mit anderen Worten, im Vergleich zum eingangs erwähnten, den Stand der Technik bildenden und ohne diesen Schritt (b) ablaufenden Verfahren erlaubt das erfindungsgemäße Verfahren eine um ca. mindestens 5 Absolut-% gesteigerte unmittelbare Rhenium-Rückgewinnung. Damit verbunden wird das im Rückstand als Metall zurückgewonnene mindestens eine Platingruppenelement mit geringerer Verunreinigung durch Rhenium erhalten.

Üblicherweise schließen sich an Schritt (e) des erfindungsgemäßen Verfahrens übliche dem Fachmann bekannte Schritte zur Abtrennung und Reinigung des Rheniums aus der flüssigen Phase einerseits und zur Abtrennung und Reinigung des mindestens einen Platingruppenelementes aus dem festen Rückstand andererseits an. Verwiesen sei hier auf die Ausführungen auf Seiten 8-10 des eingangs schon genannten Artikels von H. Meyer und M. Grehl.

### Beispiele

### Beispiel 1 (erfindungsgemäß)

1000 Liter einer 50 gew.-%igen wässrigen Lösung von Natriumhydroxid wurden in einem Druckreaktor vorgelegt und das Rührwerk eingeschaltet. Bei Raumtemperatur wurde verbrauchter Reforming-Katalysator (990 kg Aluminiumoxid-Pellets mit einem Durchmesser von 2-4 mm, Rheniumgehalt 3960 g, Platingehalt 1980 g) hinzugegeben. Anschließend wurden 550 Liter der 50 gew.-%igen NaOH-Lösung und 240 Liter Wasser eingefüllt. Die Mischung wurde auf 60 °C erwärmt und danach wurde 4 Stunden lang Luft (ca. 10000 Liter/Stunde) über eine Druckluftleitung am Reaktorboden ein- und durch die Mischung geleitet. Anschließend wurde 2 Stunden mit Stickstoff gespült. Danach wurden 2 kg Natriumformiat in die Mischung gegeben und der Druckreaktor verschlossen. Die Mischung wurde auf 195 °C erhitzt und für 7 Stunden auf dieser Temperatur gehalten und gerührt. Danach wurde der Ansatz abkühlen gelassen und bei Erreichen von 70 °C mittels einer Filterpresse filtriert. Der erhaltene feste Rückstand (nach HCl/Cl₂-Aufschluß) als auch das erhaltene Filtrat wurden mittels ICP-OES analysiert hinsichtlich Platin- und Rheniumgehalt. Auf Basis der Analysenwerte wurde der Rhenium- und Platinananteil im festen Rückstand bzw. im Filtrat errechnet.

### Vergleichsbeispiel 2

Beispiel 1 wurde wiederholt jedoch ohne Drucklufteinleitung in die Mischung.

Nachfolgende Tabelle zeigt die erhaltenen Ergebnisse.

| | Beispiel 1 | Vergleichsbeispiel 2 |
|---|---|---|
| Rheniumanteil im Katalysator | 3960 g | 3960 g |
| Platinanteil im Katalysator | 1980 g | 1980 g |
| Rheniumanteil im Filtrat | 3760 g | 3500 g |
| Rheniumanteil im festen Rückstand | 200 g | 460 g |
| Platinanteil im Filtrat | < 25g (Nachweisgrenze) | < 25 g (Nachweisgrenze) |

## Patentansprüche

1. Verfahren zur Rückgewinnung von Rhenium und mindestens einem Platingruppenelement aus Aluminiumoxid-basiertem Katalysatorträgermaterial, Rhenium sowie mindestens ein Element der Platingruppe umfassenden Katalysatorpartikeln, umfassend die aufeinander folgenden Schritte:
(a) Herstellen einer Mischung aus besagten Katalysatorpartikeln und einer wässrigen 30-50 gew.-%igen Alkalihydroxid-Lösung,
(b) Einleiten von Sauerstoff, Luft oder einem Gasgemisch umfassend Inertgas und mindestens 20 Vol.-% Sauerstoff in die in Schritt (a) hergestellte Mischung,
(c) Erhitzen der in Schritt (b) erhaltenen Mischung unter Druck auf eine Temperatur im Bereich von 150 bis 220 °C für einen Zeitraum von 1 bis 16 Stunden,
(d) Abkühlen der in Schritt (c) erhaltenen flüssigen Zusammensetzung,
(e) Abtrennen festen Rückstands aus der in Schritt (d) erhaltenen abgekühlten flüssigen Zusammensetzung unter Gewinnung einer flüssigen Phase,
wobei während der Teilschrittfolge (a) bis (c) ein zur Reduktion von Perrhenat nicht befähigtes Reduktionsmittel zu der betreffenden Mischung zugegeben wird.

2. Verfahren nach Anspruch 1, wobei es sich bei den Katalysatorpartikeln um zerkleinerten Katalysator und/oder Schüttgutkatalysator-Formkörper handelt.

3. Verfahren nach Anspruch 1 oder 2, wobei die Katalysatorpartikel aus verbrauchtem Katalysator oder verbrauchtem Reforming-Katalysator bestehen, wobei das verbrauchte Katalysatormaterial vorbehandelt worden sein kann.

4. Verfahren nach einem der vorhergehenden Ansprüche, wobei die Katalysatorpartikel einen Gesamtmengenanteil von Rhenium plus dem mindestens einen Platingruppenelement im Bereich von 0,1 bis 1,4 Gew.-% aufweisen.

5. Verfahren nach einem der vorhergehenden Ansprüche, wobei der Rheniumgehalt der Katalysatorpartikel im Bereich von 0,01 bis 0,7 Gew.-% liegt.

6. Verfahren nach einem der vorhergehenden Ansprüche, wobei der Gehalt des mindestens einen Platingruppenelements der Katalysatorpartikel im Bereich von 0,1 bis 0,7 Gew.-% liegt.

7. Verfahren nach einem der vorhergehenden Ansprüche, wobei die Mischung aus den Katalysatorpartikeln und der Alkalihydroxid-Lösung in einem Gewichtsverhältnis von 1 Gewichtsteil Katalysatorpartikel : 1 - 2,5 Gewichtsteilen Alkalihydroxid-Lösung hergestellt wird.

8. Verfahren nach einem der vorhergehenden Ansprüche, wobei das Gas in der unteren Hälfte der Mischung oder am Boden eines die Mischung enthaltenden Behälters eingeleitet wird.

9. Verfahren nach einem der vorhergehenden Ansprüche, wobei die Dauer von Schritt (b) im Bereich von 0,5 bis 10 Stunden liegt.

10. Verfahren nach einem der vorhergehenden Ansprüche, wobei zwischen den Schritten (b) und (c) eine Spülung mit Inertgas erfolgt.

11. Verfahren nach einem der vorhergehenden Ansprüche, wobei das zur Reduktion von Perrhenat nicht befähigte Reduktionsmittel zwischen den Schritten (b) und (c) und/oder während Schritt (c) zugegeben wird.

12. Verfahren nach einem der vorhergehenden Ansprüche, wobei das zur Reduktion von Perrhenat nicht befähigte Reduktionsmittel das mindestens eine Platingruppenelement aus einem oxidierten Zustand (Oxidationszahl > 0) zum metallischen Platingruppenelement zu reduzieren vermag.

13. Verfahren nach einem der vorhergehenden Ansprüche, wobei das zur Reduktion von Perrhenat nicht befähigte Reduktionsmittel Formiat umfasst oder ist.

14. Verfahren nach Anspruch 13, wobei die Zugabe von Formiat in Form von Ameisensäure oder in Form von Alkaliformiat geschieht.

15. Verfahren nach Anspruch 13 oder 14, wobei das Formiat in einem molaren Verhältnis von 5 bis 20 Mol Formiat pro Mol des in den Katalysatorpartikeln enthaltenen mindestens einen Platingruppenelements zugesetzt wird.

## Claims

1. A method for recovering rhenium and at least one platinum group element from aluminium-oxide-based catalyst carrier material, rhenium as well as catalyst particles comprising at least one element of the platinum group, the method comprising the following successive steps:
(a) preparing a mixture of said catalyst particles and an aqueous 30-50 weight per cent alkali hydroxide solution,
(b) introducing oxygen, air or a gas mixture comprising an inert gas and at least 20 volume per cent of oxygen into the mixture prepared in step (a),
(c) heating the mixture obtained in step (b) under pressure to a temperature within the range from 150 to 220 °C for a period of 1 to 16 hours,
(d) cooling down the liquid composition obtained in step (c),
(e) isolating any solid residue from the cooled-down liquid composition obtained in step (d), thus obtaining a liquid phase,
wherein a reducing agent not capable of reducing perrhenate is added to the mixture in question during the partial sequence of steps (a) to (c).

2. The method in accordance with Claim 1, wherein the catalyst particles are a crushed catalyst and/or a shaped body of a bulk material catalyst.

3. The method in accordance with Claim 1 or 2, wherein the catalyst particles consist of a used-up catalyst or a used-up reforming catalyst, wherein the used-up catalyst material may have been pre-treated.

4. The method in accordance with any one of the preceding claims , wherein the catalyst particles have a total mass content of rhenium plus the at least one platinum group element within the range from 0.1 to 1.4 weight per cent.

5. The method in accordance with any one of the preceding claims, wherein the rhenium content of the catalyst particles are within the range from 0.01 to 0.7 weight per cent.

6. The method in accordance with any one of the preceding claims, wherein the content of the at least one platinum group element of the catalyst particles is within the range from 0.1 to 0.7 weight per cent.

7. The method in accordance with any one of the preceding claims, wherein the mixture consisting of the catalyst particles and the alkali hydroxide solution is prepared at a weight ratio of 1 part by weight of the catalyst particles : 1-2.5 parts by weight of the alkali hydroxide solution.

8. The method in accordance with any one of the preceding claims, wherein the gas is introduced into the lower half of the mixture or onto the bottom of a container containing the mixture.

9. The method in accordance with any one of the preceding claims, wherein the duration of step (b) is within the range from 0.5 to 10 hours.

10. The method in accordance with any one of the preceding claims, wherein a rinse with inert gas is performed between steps (b) and (c).

11. The method in accordance with any one of the preceding claims, wherein the reducing agent not capable of reducing perrhenate is added between steps (b) and (c) and/or during step (c).

12. The method in accordance with any one of the preceding claims, wherein the reducing agent not capable of reducing perrhenate is able to reduce the at least one platinum group element from an oxidised state (oxidation number >0) to a metallic platinum group element.

13. The method in accordance with any one of the preceding claims, wherein the reducing agent not capable of reducing perrhenate comprises or is formiate.

14. The method in accordance with Claim 13, wherein the addition of formiate is performed in the form of formic acid or in the form of alkali formiate.

15. The method in accordance with Claim 13 or 14, wherein the formiate is added at a molar ratio of 5 to 20 mol of formiate to one mol of the at least one platinum group element contained in the catalyst particles.

## Revendications

1. Procédé de récupération de rhénium et d'au moins un élément du groupe platine de particules de catalyseur comprenant un matériau de support de catalyseur à base d'oxyde d'aluminium, du rhénium ainsi qu'au moins un élément du groupe platine, comprenant les étapes successives de :
(a) fabrication d'un mélange des dites particules de catalyseur et d'une solution d'hydroxyde alcalin aqueuse à 30 à 50 % en poids,
(b) introduction d'oxygène, d'air ou d'un mélange gazeux comprenant du gaz inerte et au moins de l'oxygène à 20 % en volume dans le mélange fabriqué à l'étape (a),
(c) chauffage du mélange obtenu à l'étape (b) sous pression à une température dans la région de 150 à 220°C pendant une période de 1 à 16 heures,
(d) refroidissement de la composition liquide obtenue à l'étape (c),
(e) séparation du résidu solide de la composition liquide refroidie obtenue à l'étape (d) avec obtention d'une phase liquide,
dans lequel un réducteur non qualifié pour la réduction de perrhénate est ajouté au mélange concerné pendant la succession d'étapes partielles (a) à (c).

2. Procédé selon la revendication 1, dans lequel il s'agit pour les particules de catalyseur d'un catalyseur fragmenté et/ou d'un corps de moule de catalyseur en vrac.

3. Procédé selon la revendication 1 ou 2, dans lequel les particules de catalyseur se composent de catalyseur usagé ou de catalyseur de reformage usagé, dans lequel le matériau de catalyseur usagé peut avoir été prétraité.

4. Procédé selon une des revendications précédentes, dans lequel les particules de catalyseur présentent une proportion quantitative totale de rhénium plus de l'au moins un élément du groupe platine dans la région de 0,1 à 1,4 % en poids.

5. Procédé selon une des revendications précédentes, dans lequel la teneur en rhénium des particules de catalyseur se situe dans la région de 0,01 à 0,7 % en poids.

6. Procédé selon une des revendications précédentes, dans lequel la teneur en l'au moins un élément du groupe platine des particules de catalyseur se situe dans la région de 0,1 à 0,7 % en poids.

7. Procédé selon une des revendications précédentes, dans lequel le mélange des particules de catalyseur et de la solution d'hydroxyde alcalin est fabriqué dans un rapport pondéral de 1 partie en poids de particules de catalyseur/1 à 2,5 parties en poids de solution d'hydroxyde alcalin.

8. Procédé selon une des revendications précédentes, dans lequel le gaz est introduit dans la moitié inférieure du mélange ou au fond d'un récipient contenant le mélange.

9. Procédé selon une des revendications précédentes, dans lequel la durée de l'étape (b) se situe dans la région de 0,5 à 10 heures.

10. Procédé selon une des revendications précédentes, dans lequel un rinçage avec du gaz inerte s'effectue entre les étapes (b) et (c).

11. Procédé selon une des revendications précédentes, dans lequel le réducteur non qualifié pour la réduction de perrhénate est ajouté entre les étapes (b) et (c) et/ou pendant l'étape (c).

12. Procédé selon une des revendications précédentes, dans lequel le réducteur non qualifié pour la réduction de perrhénate peut réduire l'au moins un élément du groupe platine d'un état oxydé (degré d'oxydation > 0) en l'élément métallique du groupe platine.

13. Procédé selon une des revendications précédentes, dans lequel le réducteur non qualifié pour la réduction de perrhénate comprend ou est du formiate.

14. Procédé selon la revendication 13, dans lequel l'ajout de formiate se produit sous la forme d'acide formique ou sous la forme de formiate alcalin.

15. Procédé selon la revendication 13 ou 14, dans lequel le formiate est additionné dans un rapport molaire de 5 à 20 moles de formiate par mole de l'au moins un élément du groupe platine contenu dans les particules de catalyseur.
